# EUROPEAN PATENT SPECIFICATION

(11) **EP 1 999 327 B1**
(45) Date of publication and mention of the grant of the patent: **25.01.2012**
(21) Application number: 07752641.6
(22) Date of filing: 08.03.2007
(51) Int. Cl.: E05D 11/08, G06F 1/16

(54) **SHEARING-FORCE MECHANISM WITH CROSS-LINKED THERMOPLASTIC**
SCHERKRAFTMECHANISMUS MIT VERNETZTEM THERMOPLAST
MECANISME DE FORCE DE CISAILLEMENT AVEC THERMOPLASTIQUE RETICULE

(30) Priority: 08.03.2006 US 780114 P
(43) Date of publication of application: 10.12.2008
(73) Proprietor: REELL PRECISION MANUFACTURING CORPORATION, St. Paul, MN 55110-5103 (US)
(72) Inventor: BILLINGS, Philip, A., Shoreview, Minnesota 55126 (US); SCHANK, Scott, Woodbury, Minnesota 55125 (US)
(74) Representative: Schoppe, Fritz
(86) International application number: PCT/US2007/005957
(87) International publication number: WO 2007/103519

(56) References cited:
- WO-A-90/15265
- WO-A-2005/027801
- GB-A- 747 986
- JP-A- 7 069 075
- US-A- 4 445 623
- US-A- 4 861 107
- US-A- 5 509 176
- US-A1- 2002 174 519

## Description

### Background

Many applications require controlled movement between two elements. For example, hinges are often used for providing a movable connection between different portions of an apparatus. This movement often requires repeated cycles of smooth and substantially repeatable force exerted by the user of the device to position one element relative to another element. The result of this movement is positioning of the device in a way that resists further movement against disturbing environmental forces such as imposed by gravity or vibration.

One such example of such a hinge mechanism is in conjunction with a laptop computer, which hinges a screen relative to a base. Other applications may include relative linear motion between two elements. For example, it may be desired to control the up and down motion of a headrest relative to a seat.

Unlike simpler bearing applications, whose object is to minimize wear by minimizing friction, controlled movement and positioning devices must generate significant and substantially repeatable forces or torques through controlled friction, often over many thousands of operating cycles. Furthermore, the need to minimize the size of these elements relative to these forces and torques results in the generation of internal stresses hundreds of times greater than those experienced by typical bearing applications.

For these reasons, the preferred technology set for such devices has been precision-formed hardened steel surfaces lubricated with grease. However, this technology results in higher than desired cost, complexity of manufacture, and complications attendant to grease application.

Engineering plastics, while finding wide use in bearing applications, have found only limited use in such controlled movement and positioning applications. While eliminating the need for grease with their self-lubricating properties, these engineering plastics typically cannot withstand high internal stresses without stress relaxation or creep, making them unsuitable for applications requiring both small size and large repeatable forces and torques. A few engineering plastics such as UHMW-PE have partially overcome this size drawback, but require more expensive manufacturing operations than molded or extruded plastics to achieve a finished, functional shape.

WO 90/15265 A discloses a friction clutch including a pivot pin and a capture element that tightly encircles a portion of the pivot pin. The material characteristics of the capture element enable it to hold the pivot pin in place when no external force is applied to either the pivot pin or the capture element, but allow relative movement to occur between the pivot pin and the capture element when a sufficient external force is applied to the pivot pin or the capture element. The pivot pin is formed of a metal, and the capture element is formed of an ultra-high molecular weight polyethylene.

For these and other reasons, there exists a need for the present invention.

### Summary

On embodiment includes a device having first and second elements. The first element includes a cross-linked thermoplastic. The second element is configured to engage and to strain the first element by a predetermined amount. The first and second elements are configured to move relative to each other and such that movement of the first and second elements produces a substantially repeatable shearing force between the first and second elements.

### Brief Description of the Drawings

The accompanying drawings arc included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Figures 1A and 1B illustrate prospective and cross-sectional views of a shearing-force mechanism in accordance with one embodiment.
Figures 2A and 2B illustrate prospective and cross-sectional views of an alternative shearing-force mechanism in accordance with one embodiment.
Figures 3A and 3B illustrate prospective and cross-sectional views of an alternative shearing-force mechanism in accordance with one embodiment.
Figures 4A and 4B illustrate exploded and cross-sectional views of an alternative shearing-force mechanism in a torque hinge application in accordance with one embodiment.
Figures 5A and 5B illustrate prospective and cross-sectional views of an alternative shearing-force mechanism in a linear-force device in accordance with one embodiment.
Figures 6A through 6C illustrate cross-sectional views of alternative embodiments of shearing-force mechanisms.
Figures 7A and 7B illustrate exploded and cross-sectional views of an alternative shearing-force mechanism in a torque hinge application in accordance with one embodiment.
Figures 8A and 8B illustrate exploded and cross-sectional views of an alternative shearing-force mechanism in a torque hinge application in accordance with one embodiment.
Figures 9A and 9B illustrate exploded and cross-sectional views of an alternative shearing-force mechanism in a torque hinge application in accordance with one embodiment.

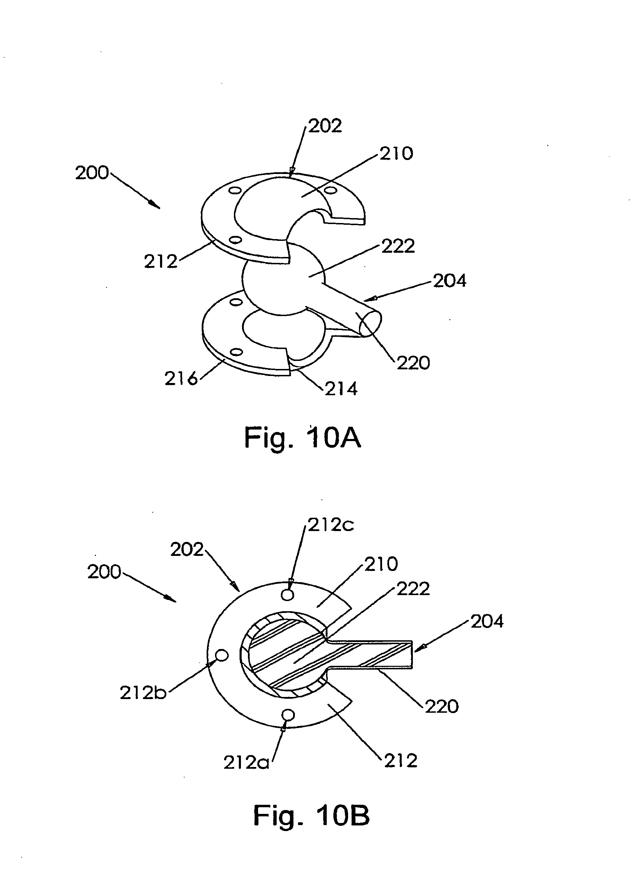

Figures 10A and 10B illustrate exploded and cross-sectional views of an alternative shearing-force mechanism in accordance with one embodiment.

### Detailed Description

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

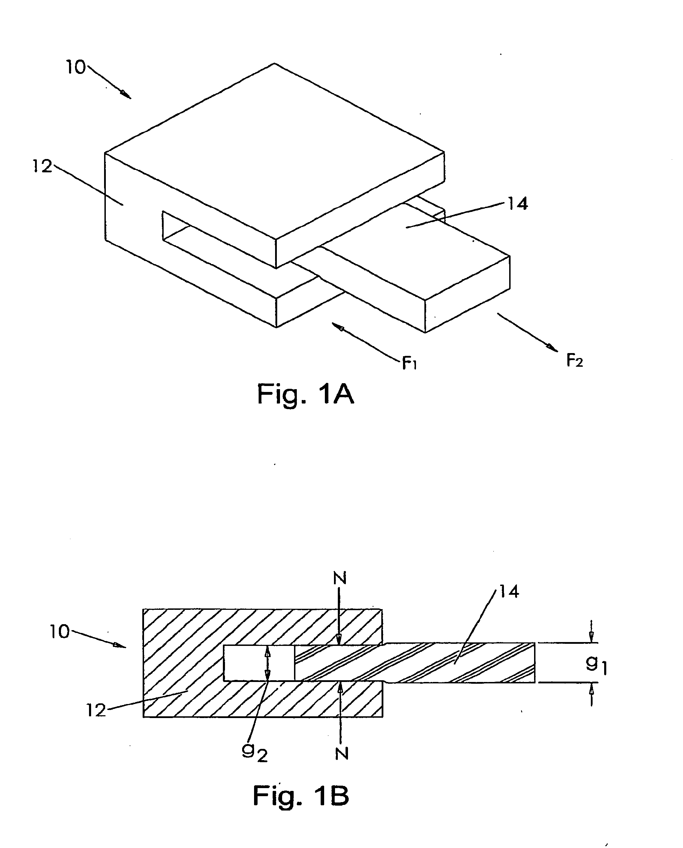

The Figures 1A and 1 B illustrate respective prospective and cross-sectional views of shearing-force mechanism 10 in accordance with one embodiment. Shearing-force mechanism 10 includes receiver 12 and insert 14. As specifically illustrated in the cross-sectional view of Figure 1B, insert 14 has a relaxed height of g₁.

In one embodiment, receiver 12 is of sufficient rigidity to maintain a strain imposed on insert 14. As such, when insert 14 is forced into the opening formed by the c-shape of receiver 12, insert 14 is compressed by a normal force (indicated with N in Figure 1B). In one embodiment, the normal force N is caused by the opening in receiver 12 having a height of g₂, which is smaller than the height g₁ of one of insert 14. In the cross-sectional view of Figure 1B the compression of insert 14 is illustrated with a small shoulder in insert 14 as it enters the opening of receiver 12. In the illustration, the normal force resulting from the interference is directed in the vertical direction of the arrows indicating the normal force N.

Compressing insert 14 from it relaxed height g₁ down to the height of the opening g₂ in receiver 12 causes material strain (ε) on insert 14. In the example, strain (ε) is equal to (g₁ - g₂)/g₁. Where the height differential between insert 14 height g₁ and opening height g₂ is significant, the material strain (ε) on insert 14 is likewise significant. Furthermore, the compression caused by the height differential and resulting normal force N on insert 14 can also be used to calculate the stress on insert 14 using Hooke's law. Hooke's law provides that stress (σ) is equal to the strain (ε) multiplied by the modulus (E) of the material.

In one embodiment, insert 14 is a thermoplastic material. For most thermoplastic materials, subjecting them to a high normal force, such as that indicated in Figures 1A and 1B, will strain the thermoplastic beyond its elasticity causing failure in the material. In one embodiment of the present invention, however, insert 14 is made of a cross-linked thermoplastic. Cross-linked thermoplastic contains cross-linked bonds which are introduced into the thermoplastic structure. Examples of cross-linking thermoplastic have been known for decades, and examples can be found in, for example, U.S. Patent Number 3,097,150 to Redding et al.

One type of cross-linked thermoplastic is known as cross-linked polyethylene or "PEX". There are different types of PEX, commonly referred to as PEX-A, PEX-B and PEX-C. PEX-A variety PEX is produced by the peroxide or "Engel method," referring to the inventor of a process technique for forming it; see, for example, U.S. Patent Number 3,591,674 to Engel. This method performs "hot" cross-linking, above the crystal melting temperature. It provides a consistent and uniform cross-linking with good control over the production process. However, the process takes longer and tends to be more expensive than the other two methods (below), as the polymer has to be kept at high temperature and pressure for long periods during the extrusion process.

PEX-B variety PEX is referred to as the "silane method" or the "moisture cure" method. In this method, cross-linking is performed in a secondary post-extrusion process, producing cross-links between a cross-linking agent (eg. vinylsilane) and a catalyst added into the polymer matrix during extrusion. One of several processes, for example, Sioplas, Spherisil or Monosil, are used in this method. The process can be accelerated with heat and moisture. Unlike PEX-A and PEX-C, the bonds are not between the carbon atoms, but are realized as oxygen-silicon-oxygen bridges, which are principially similar to the sulfer bridges introduced during rubber vulcanization.

PEX-C variety PEX is produced by an electron irradiation method, in a "cold" cross-linking process, that is, below the crystal melting temperature. It provides less uniform, lower-degree cross-linking than the Engel method, especially at tube diameters over 1 inch, and when the process is not controlled properly, the outer layer of the tubes may become brittle. However, it is the cleanest, most environmentally-friendly method of the three, as it does not involve other chemicals and uses only high-energy electrons to split the carbon-hydrogen bonds and facilitate cross-linking. Because the irradiation takes place after the tube is produced, cross-linking can be performed with this method in a different processing step and/or facility.

When cross-linked thermoplastic, such as the PEX examples cited above, is used for insert 14, the normal force N asserted against insert 14 by receiver 12 creates a relatively uniform and stable stress (σ) at very high strain (ε), significantly higher than thermoplastic that is not cross-linked. Loading the cross-linked thermoplastic with a relatively uniform stress (σ) at high strain (ε) can then be utilized in providing a very accurate and predictable shearing-force in many applications.

For example, Figure 1A illustrates a first force direction F₁ and a second force direction F₂, which are directly opposed. When a force is applied to insert 14 in either the first or second force directions F₁ or F₂, insert 14 is moved relative to receiver 12 - either "in" for force direction F₁ or "out" for force direction F₂ relative to the illustrations in Figures 1A and 1B. In the illustration, the first and second force directions F₁ and F₂ are perpendicular the applied normal force N. With this relative movement of insert 14 and receiver 12, a relatively uniform and predictable shearing-force is produced when insert 14 is loaded with a relatively stable and uniform strain (ε) from normal force N of receiver 12.

In order make practical use of the shearing force created by such relative movement, insert 14 needs to be loaded with a significant amount of strain (ε). Most thermoplastics cannot withstand the amount of strain (ε) that is required to make practical use of a created shearing force. For example, strain (ε) of 2 percent or more is more than most thermoplastics can withstand. The size that would be required for the insert 14 made of thermoplastic would make it impractical for many applications.

One type of thermoplastic that has shown some promise in withstanding significant strain (ε) is ultra high molecular weight (UHMW) thermoplastics. UHMW thermoplastic is generally defined as thermoplastic having a molecular weight of 3,100,000 or more. These UHMW materials, however, are not practical for many applications. In addition to being quite expensive, these UHMW materials cannot be easily injection molded or even readily extruded.

UHMW materials have a melt flow index of zero and, as such cannot be readily injection molded. Furthermore, regular tool steel will dull easily on UHMW materials. Dull tools will then overheat the surface, causing internal stresses and possibly warping or distortion. UHMW-PE is most often formed into bulk shapes, and then machined. While the bulk material is somewhat more expensive than other engineering plastics, the need to machine it further widens the cost disadvantage. All of these limitations complicate manufacturing and forming UHMW materials in many practical applications or even prevent their use in many other applications.

When a cross-linked thermoplastic material is used for insert 14, however, a thermoplastic can be used to easily form the insert into any desired shape or form. Furthermore, insert 14 can be cross-linked thereby creating the cross-linking thermoplastic and giving the material the properties needed to withstand a relatively uniform and stable stress (σ) at very high strain (ε) without causing the cross-linked thermoplastic to deform past its elasticity. In one example, a cross-linked polyethylene (PEX) is used for insert 14.

In some embodiments, when cross-linked thermoplastic material is used for insert 14, it can remain elastic up to approximately 6% strain (ε), which is far beyond the elastic limit of most plastics. "Elastic" as used here, means that the material will return to its original dimension if unloaded or unstrained. Furthermore, in some embodiments the cross-linked thermoplastic material remains a viable material for generating repeatable shear at strain (ε) up to and beyond 15%. While the material is no longer elastic at this point - if unloaded there will be a semi-permanent deformation - it still continues to generate repeatable shearing forces, unlike most plastics. As such, loading the cross-linked thermoplastic with a relatively uniform stress (σ) at high strain (ε) can then be utilized in providing a very accurate and predictable shearing force in many applications.

Furthermore, configuration of receiver 12 can be specifically controlled such that it applies a predictable and relatively uniform amount of high strain (ε) on the cross-linked thermoplastic material, such as a PEX, of insert 14. Controllably loading insert 14 may then be used to control and predict the amount or level of shearing force generated by shearing-force generator 10 in certain embodiments, even at high levels of strain (ε).

In addition, shearing-force mechanism 10 can also be configured such that receiver 12 is made of PEX or other cross-linked thermoplastic, while insert 14 is of sufficient rigidity to maintain a strain (ε) imposed on receiver 12. As such, it is possible to "invert" the embodiment and still generate a usable shearing force. In fact, in each of the embodiments described below, a cross-linked thermoplastic is discussed with respect to a certain element, but these embodiments can also be inverted to have other elements made of a cross-linked thermoplastic and still generate repeatable shearing forces.

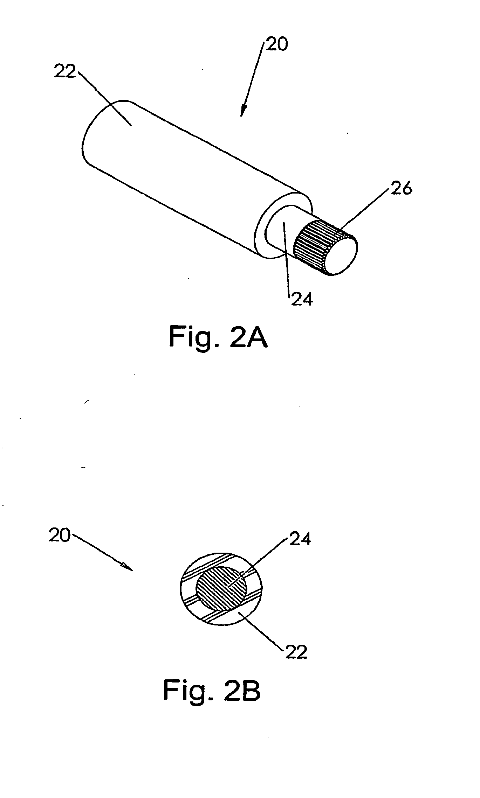

Figures 2A and 2B illustrate respective prospective and cross-sectional views of shearing-force mechanism 20 in accordance with one embodiment. Shearing-force mechanism 20 includes sleeve 22 and shaft 24. In one embodiment, shaft 24 also includes knurls 26. In one embodiment, sleeve 22 is made of a cross-linked thermoplastic material, such as PEX, into which shaft 24 is inserted. Relative to the cross-linked thermoplastic of sleeve 22, shaft 24 is of sufficient rigidity to maintain a strain (ε) imposed on sleeve 22. In one example, shaft 24 is mild steel and in another it is hardened steel. In one case, the outer diameter of shaft 24 is greater than the inner diameter of sleeve 22 such that insertion of shaft 24 into sleeve 22 deflects or compresses sleeve 22, thereby loading sleeve 22 with relatively uniform strain (ε).

In one example, shearing-force mechanism 20 can be used to generate relatively constant torque. Shaft 24 can be rotated within sleeve 22 while sleeve 22 is held stable. For example, a hinged element can be coupled to the knurls 26 of shaft 24 and rotated with shaft 24 relative to sleeve 22. The relatively uniform strain (ε) imposed on sleeve 22, in combination with the relative rotation of sleeve 22 and shaft 24, creates a relatively uniform torque.

Where sleeve 22 is a cross-linked thermoplastic material, it can be easily formed into a desired shape, for example, by injection molding or extruding a thermoplastic into the desired form. The thermoplastic can be cross-linked during or after forming to create the cross-linked thermoplastic material and its associated properties. Once sleeve 22 formed with cross-linked thermoplastic material, it has the properties needed to withstand a relatively uniform and stable stress (σ) at very high strain (ε) without causing the cross-linked thermoplastic to deform past its elasticity. In one example, sleeve 22 is formed with cross-linked thermoplastic material and is loaded with strain (ε) well beyond 3 percent, such that a relatively uniform torque is generated with relative rotation of sleeve 22 and shaft 24:

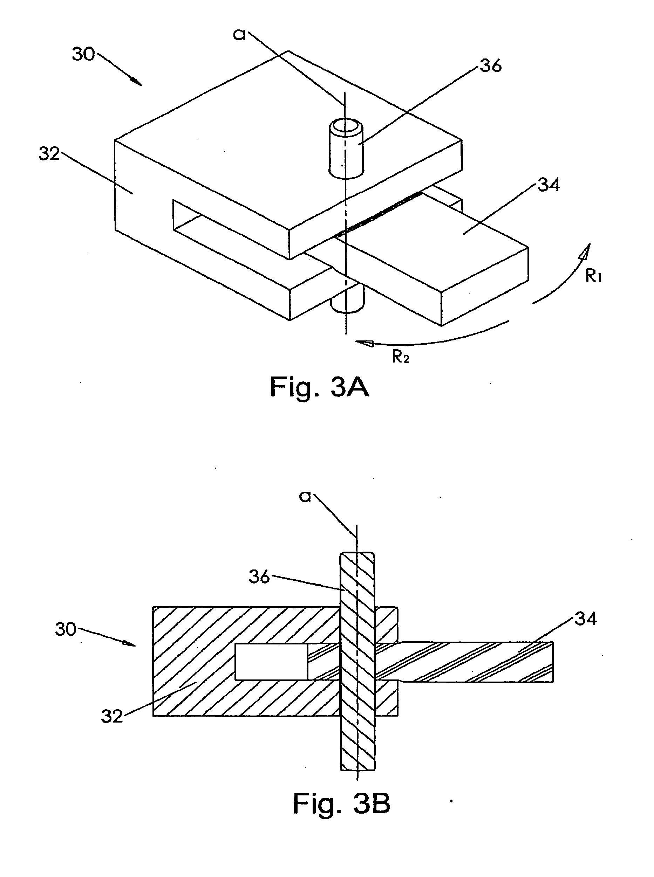

Figures 3A and 3B illustrate respective prospective and cross-sectional views of shearing-force mechanism 30 in accordance with one embodiment. Shearing-force mechanism 30 includes receiver 32, insert 34 and pivot rod 36. Similar to insert 14 in Figures 1A and 1B, insert 34 has a height that is greater than the height of the opening in receiver 32. As such, insert 34 is compressed as it is inserted within the opening of receiver 32. Pivot rod 36 is then inserted through both receiver 32 and insert 34, thereby creating an axis (a) around which insert 34 can pivot in a first direction of rotation R₁ or a second direction of rotation R₂.

In one embodiment, insert 34 is a cross-linked thermoplastic material, such as PEX, that experiences relatively high strain (ε) when it is inserted within the opening of receiver 32. When insert 34 is rotated in either the first direction of rotation R₁ or the second direction of rotation R₂ a shearing-force is generated. This shearing-force is a torque relative to the rotation of insert 34 about axis (a). In one embodiment, receiver 32 is of sufficient rigidity to assert a uniform and predictable normal force on the portion of insert 34 that is within the opening of receiver 32. Controllably loading insert 34 with this uniform and predictable normal force generates an accurate and predictable shearing-force or torque as insert 34 is rotated in first or second rotational directions R₁ and R₂. Such predictable and uniform torque may be useful in a variety of applications.

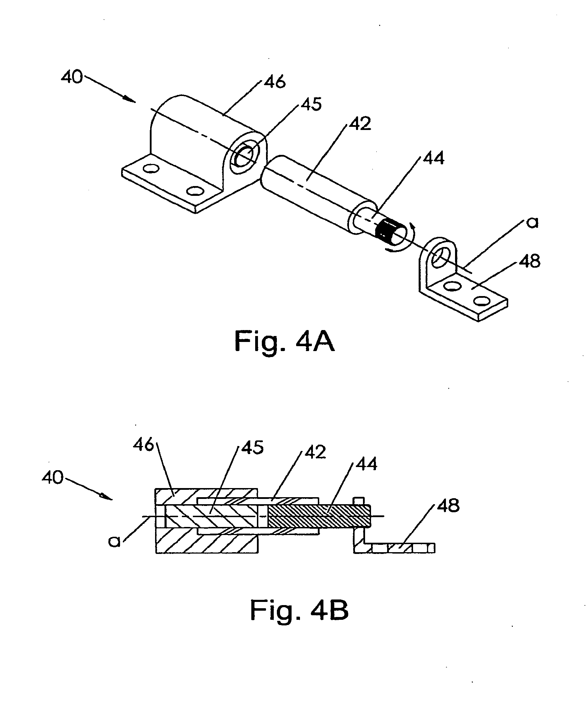

Figures 4A and 4B illustrate respective exploded and cross-sectional views of shearing-force mechanism 40 in accordance with one embodiment. Shearing-force mechanism 40 includes sleeve 42, shaft 44, dowel 45, housing 46, and bracket 48. In one example, dowel 45 and housing 46 may be formed as a single piece, and in other examples, dowel 45 can be mounted within housing 46. Sleeve 42 is inserted between dowel 45 and housing 46, such that sleeve 42 is firmly secured between housing 46 and dowel 45. Shaft 44 is inserted within sleeve 42, which projects at least some distance out of housing 46. Bracket 48 is then press fit over shaft 44 and firmly secured thereto. In one case, shaft 44 may include a knurled portion over which bracket 48 may be secured to further ensure a tight connection between them.

In one embodiment, sleeve 42 is a cross-linked thermoplastic material, such as PEX, in a tubular shape having an inner diameter that is smaller than the outer diameter of shaft 44. In one case, shaft 44 has sufficient rigidity such that, when shaft 44 is inserted within sleeve 42, sleeve 42 is deflected or compressed causing strain (ε) on sleeve 42. As shaft 44 is rotated within sleeve 42 a shearing force is created by the combination of the strain (ε) on the sleeve 42 and the relative rotation 42 and shaft 44.

In one example, housing 46 is provided with holes or other mounting means such that it can be secured to a first hinged element. Similarly, bracket 48 is configured with holes or other mounting means such that it can be secured to a second hinged element. In this way, rotation of the first hinged element tends to rotate housing 46, dowel 45 and sleeve 42. Also, rotation of the second hinged element tends to rotate bracket 48 and shaft 44. As such, when the first and second hinged elements are rotated relative to each other, shaft 44 tends to rotate within sleeve 42, thereby generating a torque.

In one example, sleeve 42 is a cross-linked thermoplastic material, such as PEX, that is loaded with a relatively stable and high strain (ε) asserted by the insertion of shaft 44 within sleeve 42. Shaft 44 and sleeve 42 can be configured to specifically control the amount of strain (ε) asserted on sleeve 42. When sleeve 42 is a cross-linked thermoplastic material, the asserted strain (ε) can be substantial. For example, strain (ε) could be 3 percent or even as high as 15 percent. In any case, controlling the amount of strain (ε) asserted on sleeve 42 allows a relatively uniform and predictable amount of shearing-force or torque generated by shearing-force mechanism 40, even at these high levels of strain (ε).

In one example, shearing-force mechanism 40 is used on a laptop computer. Housing 46 is mounted to a base portion of the laptop computer, while bracket 48 is mounted to a screen. In this way, the rotation of the computer screen relative to the base generates a torque via shearing-force mechanism 40. Again, the shaft 44 and sleeve 42 can be specifically configured to control the amount of strain (ε) asserted on sleeve 42, thereby controlling the toque generated for the application. As such, the torque can be predictably tailored to the size, shape, weight and desired performance of the laptop computer.

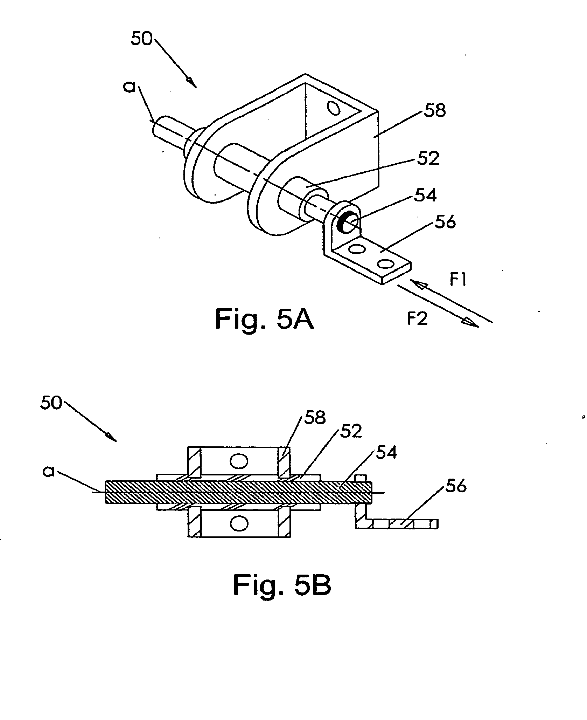

Figures 5A and 5B illustrate respective perspective and cross-sectional views of shearing-force mechanism 50 in accordance with one embodiment. Shearing-force mechanism 50 includes sleeve 52, shaft 54, first bracket 56, and second bracket 58. In one embodiment of shearing-force mechanism 50, sleeve 52 is coupled within second bracket 58. Sleeve 52 can be configured in a variety of ways to be secured second bracket 58. First bracket 56 is then coupled to shaft 54. This can also be accomplished in a variety of ways, including providing shaft 54 with knurls and press fitting first bracket 56 over the knurls on shaft 54. Shaft 54 is inserted into sleeve 52.

In one embodiment, sleeve 52 is a cross-linked thermoplastic material, such as PEX, in a tubular shape. The inner diameter of sleeve 52 is smaller than the outer diameter of shaft 54. Consequently when shaft 54 is inserted into sleeve 52, sleeve 52 is displaced or compressed such that the cross-linked thermoplastic material is strained. In one case, sleeve 52 and shaft 54 are controllably configured such that a relatively uniform and high strain (ε) is placed on the cross-linked thermoplastic material of sleeve 52.

In one embodiment, first bracket 56 is provided with holes or other mounting means such that it can be secured to a first movable element. Similarly, second bracket 58 is configured with holes or other mounting means such that it can be secured to a second movable element. In this way, movement of the first movable element tends to move first bracket 56 and shaft 54. Also, movement of the second movable element tends to move second bracket 58 and sleeve 52. As such, when the first and second movable elements are moved relative to each other along axis (a), shaft 54 tends to slide within sleeve 52, thereby generating a linear shearing force.

In one example, sleeve 52 is a cross-linked thermoplastic material, such as PEX, that is loaded with a relatively stable and high strain (ε) asserted by the insertion of shaft 54 within sleeve 52. Shaft 54 and sleeve 52 can be configured to specifically control the amount of strain (ε) asserted on sleeve 52. In one example, controlling the amount of strain (ε) asserted on sleeve 52 allows a relatively uniform and predictable amount of shearing-force or linear force generated along the axis (a) by shearing-force mechanism 50. In one example, the strain (ε) asserted on sleeve 52 is as much as 3 percent, and in others it is as much as 15 percent.

Shearing-force mechanism 50 can be used in a variety of linear force applications. For example, second bracket 58 may be attached to a seat in an automobile. First bracket 56 can then be attached to a headrest above the seat. When a force is applied in the force direction F₂, the headrest will be raised. Shearing-force mechanism 50 will provide a linear force in opposition to the force applied in force direction F₂. Similarly, a force applied in force direction F₁ will move the headrest down toward the seat. Shearing-force mechanism 50 will provide an opposing shearing-force to the force applied force direction F₁. Where the strain (ε) applied to cross-linked thermoplastic sleeve 52 is relatively uniform and high, the shearing-force or linear force is relatively accurate and predictable lending itself well to many practical applications. Controlling the strain (ε) applied to cross-linked thermoplastic sleeve 52 also controls the amount of linear shearing force generated by shearing-force mechanism 50 for the particular application.

It should also be noted that shearing-force mechanism 50 can also be used in a variety of torque applications. For example, second bracket 58 may be attached to a base element. First bracket 56 can then be attached to rotatable element that can rotate relative to the base. When a force is applied the rotatable element thereby rotating the rotatable element, shearing-force mechanism 50 will provide a torque force in opposition to the force applied to the rotatable element. Again, where the strain (ε) applied to cross-linked thermoplastic sleeve 52 is relatively uniform and high, the shearing-force or torque is relatively accurate and predictable lending itself well to many practical applications.

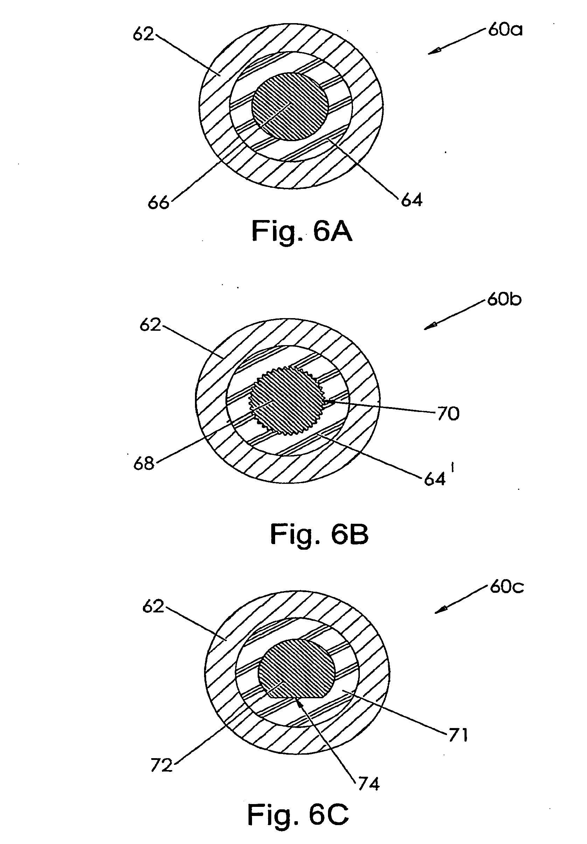

Figures 6A through 6C illustrate cross-sectional views of alternative embodiments of shearing-force mechanisms. These alternative configurations can be used in conjunction with a variety of configurations, such as those illustrated in Figures 4-5. Only cross-sectional views are illustrated for simplicity of illustration.

Shearing-force mechanism 60a in Figure 6A includes housing 62, sleeve 64, and shaft 66. In one example, sleeve 64 is made of a cross-linked thermoplastic material, such as PEX, that is sandwiched between housing 62 and shaft 66. Compressing sleeve 64 between both housing 64 and shaft 66 can achieve a fairly uniform and consistent strain (ε) on sleeve 64. As such, when sleeve 64 is moved relative to housing 62 and/or shaft 66, a relatively predictable and uniform shearing-force is generated. Controlling compression on both the inner and outer diameters of sleeve 64 can allow further control over the strain (ε) applied to cross-linked thermoplastic sleeve, thereby allowing predictable and uniform control of the shearing force generated by shearing-force mechanism 60a.

In one example, sleeve 64 is rotated relative to housing 62 and/or shaft 66 such that the shearing-force generated by shearing-force mechanism 60a is a torque. In another example, sleeve 64 is moved linearly relative to housing 62 and/or shaft 66 such that the shearing-force generated by shearing-force mechanism 60a is a linear force.

Similarly, shearing-force mechanism 60b in Figure 6B includes housing 62, sleeve 64, and shaft 68. In one example, shaft 68 further includes knurls 70 around its perimeter. The operation of shearing-force mechanism 60b is similar to that described with respect to shearing-force mechanism 60a above in the torque example. In addition, knurls 70 on shaft 68 help facilitate coupling shaft 68 with sleeve 64. In this way, as shaft 68 is rotated, sleeve 64 will rotate with shaft 68. When sleeve 64 is a cross-linked thermoplastic material and is compressed between housing 62 and shaft 68 a shearing-force or torque is produced by the relative rotation of sleeve 64 and housing 62.

Shearing-force mechanism 60c in Figure 6c includes housing 62, sleeve 71, and shaft 72. While shearing-force mechanisms 60a and 60b are configured to provide relatively uniform and constant torque under relative rotation of housing 62 and sleeve 64, shearing-force mechanism 60c is configured to provide uniform periodic torque. In this way, shaft 72 is configured with detent 74. Similarly, sleeve 71 is configured to receive detent 74 and is thicker adjacent detent 74 when shaft is in the "home" position. As such, when shaft 72 is rotated within sleeve 71, a uniform torque is produced through most of the rotation. When detent 74 rotates toward the home position where the thicker region of sleeve 71 is located, however, shaft 72 will tend to seat securely into the home position, thereby causing a slight interruption in the uniform torque. Specifically, the torque decreases below the uniform level just before shaft 72 reaches the home position, and the torque increases above the uniform level when shaft 72 is moved away from the home position. This can be a desired effect for certain applications, such as when one hinged element is configured to firmly close against another.

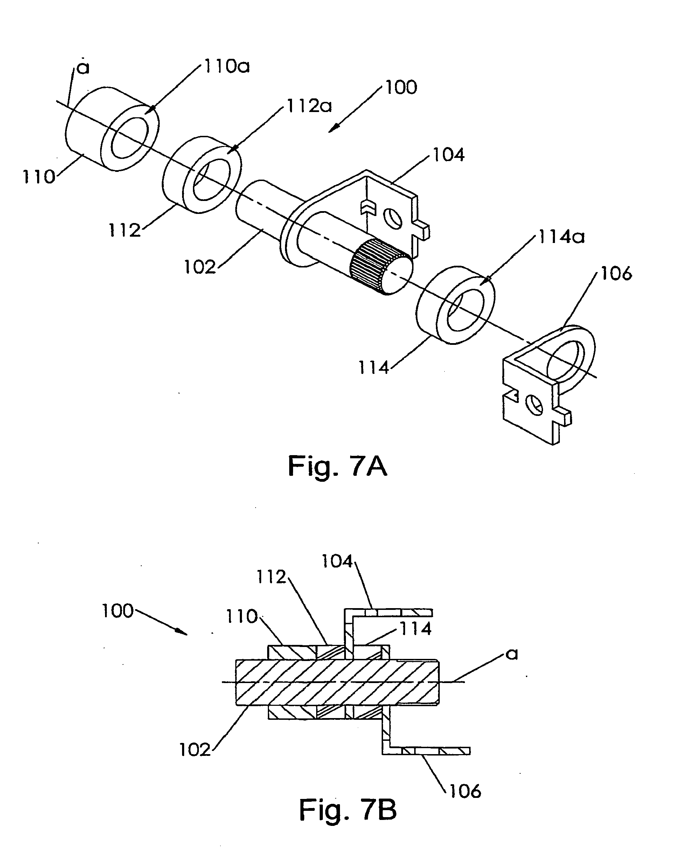

Figures 7A and 7b illustrate respective exploded and cross-sectional views of shearing-force mechanism 100 in accordance with one embodiment. Shearing-force mechanism 100 includes shaft 102, first bracket 104, second bracket 106, press ring 110, first friction element 112, and second friction element 114.

In one example, shaft 102 extends through first bracket 104 and first friction element 112 is placed over shaft 102 on one side of first bracket 104 and second friction element 114 is placed over shaft 102 on the other side of first bracket 104. Press ring 110 and second bracket 106 are then fixed over opposite ends of shaft 102 in such a way that they axially compress first and second friction elements 112 and 114 between then and against first bracket 104.

In additional to axially compressing first and second friction elements 112 and 114 between them, press ring 110 and second bracket 106 are both also coupled to shaft 102. In one example, press ring 110 and second bracket 106 are both secured to shaft 102 by a compression fit. Other means of coupling can also be used. In this way, any rotation of second bracket 106 also tends to rotate shaft 102 and press ring 110.

Furthermore, first and second friction elements 112 and 114 are configured to be coupled to press ring 110 and second bracket 106, respectively. More specifically, face 110a of press ring 110 is coupled to the adjacent face (not visible in Figure 7A) of first friction element 112. Similarly, face 114a of second friction element 114 is coupled to the adjacent surface of second bracket 106. Such coupling of first and second friction elements 112 and 114 to press ring 110 and second bracket 106 can be accomplished in a variety of ways, such as roughing up adjacent faces of first and second friction elements 112 and 114, roughing up the adjacent surfaces of press ring 110 and second bracket 106, or both. Also, knurls or tines could be added or an adhesive could be used.

In this way, first and second friction elements 112 and 114 tend to rotate with relative rotation of second bracket 106, shaft 102 and press ring 110. As such, when first and second brackets 104 and 106 rotate relative to one another, the adjacent surfaces of first and second friction elements 112 and 114 frictionally engage adjacent surfaces of first bracket 104. For example, face 112a of first friction element 112 frictionally engages the adjacent surface of first bracket 104.

In one embodiment, first and second friction elements 112 and 114 are a cross-linked thermoplastic material, such as PEX. Press ring 110 and second bracket 106 are configured axially compress first and second friction elements 112 and 114 between then thereby loading the cross-linked thermoplastic material with a controllable amount of strain (ε). In one example, the strain (ε) applied to the cross-linked thermoplastic of first and second friction elements 112 and 114 is relatively uniform and high. In one example it is controlled to a predetermined amount. As such, the shearing-force generated by the relative rotation of first and second brackets 104 and 106 is relatively accurate and predictable lending itself well to many practical applications.

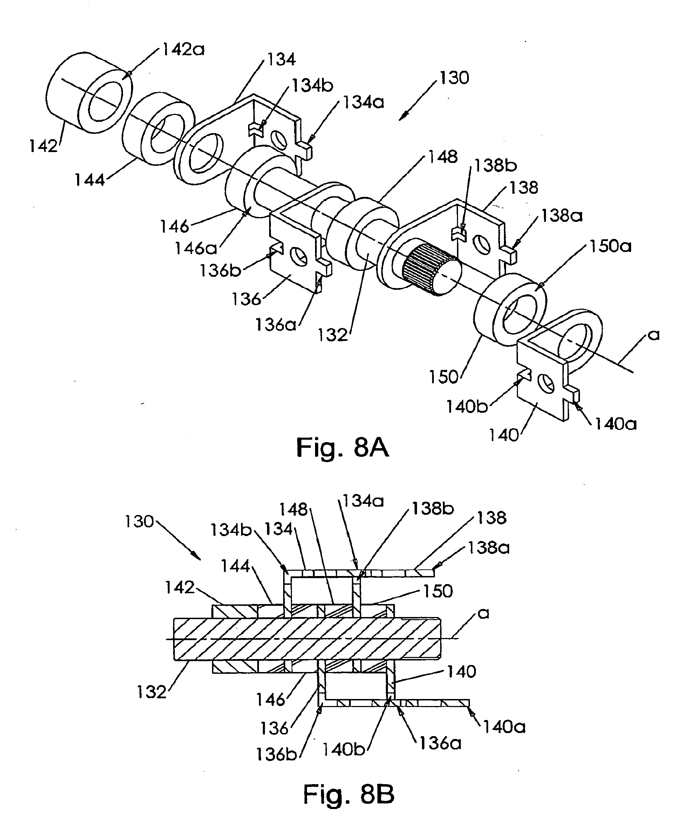

Figures 8A and 8B illustrate respective exploded and cross-sectional views of shearing-force mechanism 130 in accordance with one embodiment. Shearing-force mechanism 130 includes shaft 132, first bracket 134, second bracket 136, third bracket 138, fourth bracket 140, press ring 142, first friction element 144, second friction element 146, third friction element 148, and fourth friction element 150.

In one example, shaft 132 extends through first-fourth brackets 134-140 and first-fourth friction elements 144-150 are placed over shaft 132 in an alternating manner with first-fourth brackets 134-140, as illustrated. Press ring 142 is fixed over one end of shaft 132 and fourth bracket 140 is fixed over an opposite end of shaft 132 such that press ring 142 and fourth bracket 140 axially compress first element 144, first bracket 134, second friction element 146, second bracket 136, third friction element 148, third bracket 138, and fourth friction element 150 between them.

Similar to the embodiment in Figures 7A and 7B, first and second friction elements 144 and 146 are configured to be coupled adjacent elements because of the axial compression caused by press ring 142 and fourth bracket 140. More specifically, face 142a of press ring 142 is coupled to the adjacent face (not visible in Figure 8A) of first friction element 144. Similarly, face 146a of second friction element 146 is coupled to the adjacent surface of second bracket 136. Also, third and fourth friction elements 148 and 150 are configured to be coupled adjacent elements, namely, second bracket 136 and fourth bracket 140, respectively. More specifically, the face of third friction element 148 (not visible in Figure 8A) is coupled to the adjacent surface of second bracket 136. Similarly, face 150a of second friction element 150 is coupled to the adjacent surface of fourth bracket 140.

In this way, first-fourth friction elements 144-150 tend to rotate with relative rotation of second bracket 136, fourth bracket 140, shaft 132, and press ring 142. Also, first and third brackets 134 and 138 are coupled together (via flange 134a and slot 138b) and second and fourth brackets 136 and 140 are coupled together (via flange 136a and slot 140b). As such, when coupled first and third brackets 134 and 138 are rotated relative to coupled second and fourth brackets 136 and 140, the adjacent surfaces of first and second friction elements 144 and 146 frictionally engage adjacent surfaces of first bracket 134 and the adjacent surfaces of third and fourth friction elements 148 and 150 frictionally engage adjacent surfaces of third bracket 138.

In one embodiment, first-fourth friction elements 144-150 are a cross-linked thermoplastic material, such as PEX. Press ring 142 and second bracket 136 are configured axially compress first and second friction elements 144 and 146 between them, thereby loading the cross-linked thermoplastic material with a controllable amount of strain (e). Similarly, second bracket 136 and fourth bracket 140 are configured axially compress third and fourth friction elements 148 and 150 between them, thereby loading the cross-linked thermoplastic material with a controllable amount of strain (ε). In one example, the strain (ε) applied to the cross-linked thermoplastic of first-fourth friction elements 144-150 is relatively uniform and high. In one example it is controlled to a predetermined amount. As such, the shearing-force generated by the rotation of coupled first and third brackets 134 and 138 relative to coupled second and fourth brackets 136 and 140 is relatively accurate and predictable lending itself well to many practical applications.

First-fourth brackets 134-140 are modular in that they can be added to in order to build larger toque for shearing-force mechanism 130. For instance, relative to the embodiment illustrated in Figures 7A and 7B, the embodiment of Figures 8A and 8B generates double the torque with double the amount of brackets and friction elements. Furthermore, additional brackets and friction elements can be added to shaft 132 to incrementally increase torque of the mechanism 130. Each "odd" bracket added couples to first and third brackets 134 and 138 (via flange 134a and corresponding slot in the added bracket, if it is added adjacent third bracket 138), and each "even" bracket added couples to second and fourth brackets 136 and 140 (via flange 140a and corresponding slot in the added bracket, if it is added adjacent third bracket 140).

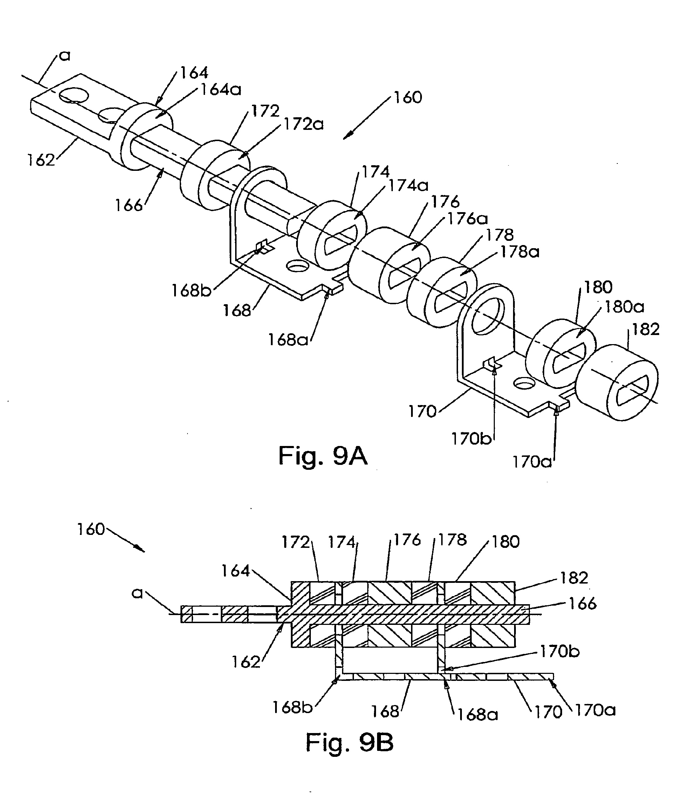

Figures 9A and 9B illustrate respective exploded and cross-sectional views of shearing-force mechanism 160 in accordance with one embodiment. Shearing-force mechanism 160 includes double-flat shaft assembly 162, first bracket 168, second bracket 170, press ring 182, first friction element 172, second friction element 174, third friction element 178, fourth friction element 180, and spacer ring 176. First and second brackets 168 and 170 each include a flange (168a and 170a) and a slot (168b and 170b). In one example, double-flat shaft assembly 162 is an integral component including a shoulder portion 164 and a shaft portion 166.

In one example, shaft portion 166 extends through first and second brackets 168 and 170, first-fourth friction elements 172, 174, 178 and 180, slip ring 176 and press ring 182. Press ring 182 is fixed over one end of shaft portion 166 in such a way that press ring 182 axially compresses first-fourth friction elements 172, 174, 178 and 180 against shoulder 164. First friction element 172 is compressed between shoulder 164 and first bracket 168, second friction element 174, slip ring 176 and second friction element 178 are compressed between first and second brackets 168 and 170, and fourth friction element 180 is compresses between second brackets 170 and press ring 182.

Similar to the embodiment in Figures 7-8, first-fourth friction elements 172, 174, 178 and 180 are configured to be coupled to one adjacent element, namely, shoulder 164, slip ring 176 and press ring 182. More specifically, face 164a of shoulder 164 is coupled to the adjacent face (not visible in Figure 9A) of first friction element 172. Face 174a of second friction element 174 is coupled to the adjacent surface of slip ring 176 (not visible in Figure 9A). Face 176a of slip ring 176 is coupled to the adjacent surface of third friction element 178 (not visible in Figure 9A). Finally, Face 180a of fourth friction element 180 is coupled to the adjacent surface of press ring 182 (not visible in Figure 9A).

In one example, first-fourth friction elements 172, 174, 178 and 180, slip ring 176, and press ring 182 each have an opening with flat portions configured to receive shaft portion 166. As such, shaft portion 166 cannot rotate within the openings of these elements. The openings in first and second brackets 168 and 170, however, are essentially round such that shaft portion 166 rotates within these openings without rotating brackets 168 and 170. Also, as with the embodiment of Figures 8A and 8B, first and second brackets 168 and 170 are coupled together (via flange 168a and slot 170b).

In this way, first-fourth friction elements 172, 174, 178 and 180, slip ring 176, and press ring 182 tend to rotate with relative rotation double-flat shaft assembly 162. Also, when coupled first and second brackets 168 and 170 are rotated relative to double-flat shaft 162, the adjacent surfaces of first and second friction elements 172 and 174 frictionally engage adjacent surfaces of first bracket 168 and the adjacent surfaces of third and fourth friction elements 178 and 180 frictionally engage adjacent surfaces of second bracket 170.

In one embodiment, first-fourth friction elements 172, 174, 178 and 180 are a cross-linked thermoplastic material, such as PEX. Press ring 182 is configured axially compress first-fourth friction elements 172, 174, 178 and 180 against shoulder 164, thereby loading the cross-linked thermoplastic material with a controllable amount of strain (ε). In one example, the strain (ε) applied to the cross-linked thermoplastic of first-fourth friction elements 172, 174, 178 and 180 is relatively uniform and high. In one example it is controlled to a predetermined amount. In one example first-fourth friction elements 172, 174, 178 and 180 are loaded to 3 percent strain (ε), and in another as much 15 percent strain (ε) is used. In any case, the shearing-force generated by the rotation of coupled first and second brackets 168 and 170 relative to double-flat shaft 162 is relatively accurate and predictable lending itself well to many practical applications.

Similar to the embodiment of Figures 8A and 8B, the embodiment of Figures 9A and 9B is modular and the overall torque of shearing-force mechanism can be increased by adding more friction elements and brackets.

One skilled in the art will understand that the embodiments illustrated exemplify configurations for generating shearing force for elements in relative motion and the other exemplary configurations are possible. For example, 10A and 10B illustrate respective exploded and cross-sectional views of shearing-force mechanism 200 in accordance with one embodiment. Shearing-force mechanism 200 includes shell assembly 202 and ball assembly 204. Shell assembly 202 includes upper half 210, upper flange 212, lower half 214, and lower flange 216. Ball assembly 204 includes ball 222 and shaft 220.

In one embodiment, ball 222 is sandwiched between upper half 210 and lower half 214, which are configured to receive it. Upper flange 212 and lower flange 216 can then be tightly coupled together, such as bolted together via holes 212a, 212b and 212c. When ball 222, upper half 210 and lower half 214 are each configured appropriately, a controllable and relatively high strain (ε) can be asserted on ball 222. As such, when shaft 220 is moved relative to shell assembly 202, as shearing force is generated by the relative movement of shell assembly 202 and ball assembly 204, while ball 222 is loaded with a high strain (s). Upper half 210 and lower half 214 are configured with an opening to allow shaft 220 to extend out from shell assembly 202 and for shaft 220 to move within the opening.

In one embodiment, ball 222 is a cross-linked thermoplastic material, such as PEX. Upper half 210 and lower half 214 are configured to radially compress ball 222, thereby loading the cross-linked thermoplastic material with a controllable amount of strain (ε). In one example, the strain (ε) applied to the cross-linked thermoplastic of ball 222 is relatively uniform and high. In one example it is controlled to a predetermined amount. In one example, ball 222 is loaded to 3 percent strain (ε), and in another as much 15 percent strain (ε) is used. In any case, the shearing-force generated by the relative rotation of shell assembly 202 and ball assembly 204 is relatively accurate and predictable lending itself well to many practical applications.

Unlike a traditional ball-and-socket used in a bearing application, shearing-force mechanism 200 is specifically configured to load a strain (ε) on ball 222. Where ball-and-socket bearing applications are configured specifically to minimize interference of the ball within the socket and prevent friction between them, shearing-force mechanism 200 is contrarily configured to specifically place a high strain (ε) on ball 222.

Other configurations of shearing-force mechanism 200 are also possible in generating a controlled shearing force. For example, rather than ball assembly 204, shell assembly 202 can be configured of a cross-linked thermoplastic material, such as PEX. Furthermore, somewhat analogous to Figure 6A, a cross-linked thermoplastic material, such as PEX, can be configured between shell assembly 202 and ball assembly 204. In that case, shell assembly 202 and ball assembly 204 can be a material with sufficient rigidity to maintain a strain (ε) imposed on the cross-linked thermoplastic material between them. Such a shearing-force mechanism also generates a controlled shearing force

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A device (10, 20, 30, 40, 50, 60, 100, 130, 160, 200) comprising a first element (14, 24, 34, 42, 52, 64, 112, 144, 172, 222) comprising a cross-linked thermoplastic and a second element (12, 22, 32, 44, 54, 66, 110, 142, 182, 210):
wherein the second element (12, 22, 32, 44, 54, 66, 110, 142, 182, 210) is configured to engage and to cause at least six percent strain on the first element (14, 24, 34, 42, 52, 64, 112, 144, 172, 222); and
wherein the first and second elements are configured to rotate relative to each other and such that strain on the first element and the movement of the first and second elements produce a substantially repeatable shearing force between the first and second elements.

2. The device (10, 20, 30, 40, 50, 60, 100, 130, 160, 200) of claim 1, wherein
the cross-linked thermoplastic of the first element comprises a cross-linked polyethylene (PEX), or has a molecular weight less than 3,000,000, or has a melt flow index greater than zero.

3. The device (10, 20, 30, 40, 50, 60, 100, 130, 160, 200) of claim 1, wherein
the first element of cross-linked thermoplastic is injection-molded thermoplastic that is cross-linked after it is molded into a desired shape or is thermoplastic that is cross-linked as it is formed into a desired shape.

4. The device (10, 20, 30, 40, 50, 60, 100, 130, 160, 200) of claim 1, wherein
deflection of the first element by the second element causes at least a six percent strain on the first element or at least a ten percent strain on the first element.

5. The device (10, 20, 30, 40, 50, 60, 100, 130, 160, 200) of claim 1, wherein
the first and second elements are rotated relative to each other such that both the relative movement of the elements and a deflection of the first element by the second element produce a substantially repeatable torque between the elements that is relatively constant.

6. The device (10, 20, 30, 40, 50, 60, 100, 130, 160, 200) of claim 1, wherein
the first and second elements are configured along an axial direction and are moved relative to each other in the axial direction such that both the relative movement of the elements and a deflection of the first element by the second element produce a substantially repeatable linear force between the elements.

7. The device (10, 20, 30, 40, 50, 60, 100, 130, 160, 200) of claim 1, wherein
the second element configured to deflect the first element thereby controllably straining the first element; and
the first and second elements are configured to move relative to each other and such that the combination of the controlled strain on the first element and the relative movement of the first and second elements produces a consistent shearing force between the first and second elements.

8. The device (10, 20, 30, 40, 50, 60, 100, 130, 160, 200) of claim 1, wherein an external load is applied to either of the first and second members thereby causing their relative movement and wherein the shearing force between the first and second elements is independent of the external load.

9. The device (10, 20, 30, 40, 50, 60, 100, 130, 160, 200) of claim 1, wherein the second element deflects the first element, resulting in a normal force on the first element in a first direction, and wherein the relative movement of the first and second elements is orthogonal to the first direction on the normal force.

10. The device (10, 20, 30, 40, 50, 60, 100, 130, 160, 200) of claim 1 configured such that the first element is coupled to a seat and the second element is coupled to a corresponding head rest such that an external load applied to the head rest causes relative movement of the first and second elements and such that the linear force between the first and second elements is independent of the external load.

## Patentansprüche

1. Eine Vorrichtung (10, 20, 30, 40, 50, 60, 100, 130, 160, 200), die ein erstes Element (14, 24, 34, 42, 52, 64, 112, 144, 172, 222), das einen vernetzten thermoplastischen Kunststoff aufweist, und ein zweites Element (12, 22, 32, 44, 54, 66, 110, 142, 182, 210) aufweist:
bei der das zweite Element (12, 22, 32, 44, 54, 66, 110, 142, 182, 210) dazu konfiguriert ist, das erste Element (14, 24, 34, 42, 52, 64, 112, 144, 172, 222) in Eingriff zu nehmen und zumindest eine sechsprozentige Beanspruchung desselben zu bewirken; und
bei der das erste und das zweite Element dazu konfiguriert sind, sich relativ zueinander und derart zu drehen, dass die Beanspruchung des ersten Elements und die Bewegung des ersten und des zweiten Elements eine im Wesentlichen wiederholbare Scherkraft zwischen dem ersten und dem zweiten Element erzeugen.

2. Die Vorrichtung (10, 20, 30, 40, 50, 60, 100, 130, 160, 200) gemäß Anspruch 1, bei der der vernetzte thermoplastische Kunststoff des ersten Elements ein vernetztes Polyethylen (PEX) aufweist oder eine relative Molekülmasse von weniger als 3.000.000 aufweist oder einen Schmelzindex von mehr als null aufweist.

3. Die Vorrichtung (10, 20, 30, 40, 50, 60, 100, 130, 160, 200) gemäß Anspruch 1, bei der das erste Element aus vernetztem thermoplastischem Kunststoff ein spritzgegossener thermoplastischer Kunststoff ist, der vernetzt wird, nachdem er in eine gewünschte Form gegossen wurde, oder ein thermoplastischer Kunststoff ist, der vernetzt wird, während er zu einer gewünschten Gestalt geformt wird.

4. Die Vorrichtung (10, 20, 30, 40, 50, 60, 100, 130, 160, 200) gemäß Anspruch 1, bei der eine Ablenkung des ersten Elements durch das zweite Element zumindest eine sechsprozentige Beanspruchung des ersten Elements oder zumindest eine zehnprozentige Beanspruchung des ersten Elements bewirkt.

5. Die Vorrichtung (10, 20, 30, 40, 50, 60, 100, 130, 160, 200) gemäß Anspruch 1, bei der das erste und das zweite Element derart relativ zueinander gedreht werden, dass sowohl die relative Bewegung der Elemente als auch eine Ablenkung des ersten Elements durch das zweite Element ein im Wesentlichen wiederholbares Drehmoment zwischen den Elementen erzeugen, das relativ konstant ist.

6. Die Vorrichtung (10, 20, 30, 40, 50, 60, 100, 130, 160, 200) gemäß Anspruch 1, bei der das erste und das zweite Element entlang einer axialen Richtung konfiguriert sind und in der axialen Richtung derart relativ zueinander bewegt werden, dass sowohl die relative Bewegung der Elemente als auch eine Ablenkung des ersten Elements durch das zweite Element eine im Wesentlichen wiederholbare lineare Kraft zwischen den Elementen erzeugen.

7. Die Vorrichtung (10, 20, 30, 40, 50, 60, 100, 130, 160, 200) gemäß Anspruch 1, bei der
das zweite Element dazu konfiguriert ist, das erste Element abzulenken und dadurch das erste Element auf steuerbare Weise zu beanspruchen; und
das erste und das zweite Element dazu konfiguriert sind, sich relativ zueinander und derart zu bewegen, dass die Kombination der gesteuerten Beanspruchung des ersten Elements und der relativen Bewegung des ersten und des zweiten Elements eine einheitliche Scherkraft zwischen dem ersten und dem zweiten Element erzeugt.

8. Die Vorrichtung (10, 20, 30, 40, 50, 60, 100, 130, 160, 200) gemäß Anspruch 1, bei der eine äußere Belastung auf entweder das erste oder das zweite Bauglied ausgeübt wird, wodurch deren relative Bewegung bewirkt wird, und bei der die Scherkraft zwischen dem ersten und dem zweiten Element unabhängig von der äußeren Belastung ist.

9. Die Vorrichtung (10, 20, 30, 40, 50, 60, 100, 130, 160, 200) gemäß Anspruch 1, bei der das zweite Element das erste Element ablenkt, was zu einer Normalkraft an dem ersten Element in einer ersten Richtung führt, und bei der die relative Bewegung des ersten und des zweiten Elements orthogonal zu der ersten Richtung auf der Normalkraft ist.

10. Die Vorrichtung (10, 20, 30, 40, 50, 60, 100, 130, 160, 200) gemäß Anspruch 1, derart konfiguriert, dass das erste Element mit einem Sitz gekoppelt ist und das zweite Element mit einer entsprechenden Kopfstütze gekoppelt ist, derart, dass eine auf die Kopfstütze ausgeübte äußere Belastung eine relative Bewegung des ersten und des zweiten Elements bewirkt, und derart, dass die lineare Kraft zwischen dem ersten und dem zweiten Element unabhängig von der äußeren Belastung ist.

## Revendications

1. Dispositif (10, 20, 30, 40, 50, 60, 100, 130, 160, 200) comprenant un premier élément (14, 24, 34, 42, 52, 64, 112, 144, 172, 222) comprenant un thermoplastique réticulé et un deuxième élément (12, 22, 32, 44, 54, 66, 110, 142, 182, 210):
dans lequel le deuxième élément (12, 22, 32, 44, 54, 66, 110, 142, 182, 210) est configuré pour venir en prise avec et pour provoquer au moins six pour cent de sollicitation sur le premier élément (14, 24, 34, 42, 52, 64, 112, 144, 172, 222); et
dans lequel le premier et le deuxième élément sont configurés pour tourner l'un par rapport à l'autre et de sorte que la sollicitation sur le premier élément et le déplacement du premier et du deuxième élément produisent une force de cisaillement substantiellement répétable entre les premier et deuxième éléments.

2. Dispositif (10, 20, 30, 40, 50, 60, 100, 130, 160, 200) selon la revendication 1, dans lequel
le thermoplastique réticulé du premier élément comprend un polyéthylène réticulé (PEX), ou a un poids moléculaire inférieur à 3.000.000, ou a un indice d'écoulement en fusion supérieur à zéro.

3. Dispositif (10, 20, 30, 40, 50, 60, 100, 130, 160, 200) selon la revendication 1, dans lequel
le premier élément en thermoplastique réticulé est un thermoplastique moulé par injection qui est réticulé après qu'il soit moulé pour obtenir une forme désirée ou est un thermoplastique qui est réticulé au fur et à mesure qu'il est formé pour obtenir une forme désirée.

4. Dispositif (10, 20, 30, 40, 50, 60, 100, 130, 160, 200) selon la revendication 1, dans lequel
la déflexion du premier élément par le deuxième élément provoque une sollicitation d'au moins six pour cent sur le premier élément ou une sollicitation d'au moins dix pour cent sur le premier élément.

5. Dispositif (10, 20, 30, 40, 50, 60, 100, 130, 160, 200) selon la revendication 1, dans lequel
les premier et deuxième éléments sont tournés l'un par rapport à l'autre de sorte que tant le déplacement relatif des éléments et une déflexion du premier élément par le deuxième élément produisent un couple substantiellement répétable entre les éléments qui est relativement constant.

6. Dispositif (10, 20, 30, 40, 50, 60, 100, 130, 160, 200) selon la revendication 1, dans lequel
les premier et deuxième éléments sont configurés selon une direction axiale et sont déplacés l'un par rapport à l'autre dans la direction axiale de sorte que tant le déplacement relatif des éléments et une déflexion du premier élément par le deuxième élément produisent une force linéaire substantiellement répétable entre les éléments.

7. Dispositif (10, 20, 30, 40, 50, 60, 100, 130, 160, 200) selon la revendication 1, dans lequel
le deuxième élément est configuré pour défléchir le premier élément, sollicitant ainsi de manière contrôlable le premier élément; et
les premier et deuxième éléments sont configurés pour se déplacer l'un par rapport à l'autre et de sorte que la combinaison de la sollicitation contrôlée sur le premier élément et le déplacement relatif des premier et deuxième éléments produisent une force de cisaillement cohérente entre les premier et deuxième éléments.

8. Dispositif (10, 20, 30, 40, 50, 60, 100, 130, 160, 200) selon la revendication 1, dans lequel une charge externe est appliquée à l'un ou l'autre des premier et deuxième éléments, provoquant ainsi leur déplacement relatif et dans lequel la force de cisaillement entre les premier et deuxième éléments est indépendante de la charge externe.

9. Dispositif (10, 20, 30, 40, 50, 60, 100, 130, 160, 200) selon la revendication 1, dans lequel le deuxième élément défléchit le premier élément, avec pour résultat une force normale sur le premier élément dans une première direction, et dans lequel le déplacement relatif des premier et deuxième éléments est orthogonal à la première direction sur la force normale.

10. Dispositif (10, 20, 30, 40, 50, 60, 100, 130, 160, 200) selon la revendication 1, configuré de sorte que le premier élément soit couplé à un siège et le deuxième élément soit couplé à un appui-tête correspondant de sorte qu'une charge externe appliquée sur 1' appui-tête provoque le déplacement relatif des premier et deuxième éléments et de sorte que la force linéaire entre les premier et deuxième éléments soit indépendant de la charge externe.
